# EUROPÄISCHE PATENTSCHRIFT

(11) **EP 2 943 751 B1**
(45) Veröffentlichungstag und Bekanntmachung des Hinweises auf die Patenterteilung: **20.03.2019**
(21) Anmeldenummer: 14700145.7
(22) Anmeldetag: 07.01.2014
(51) Int. Cl.: G01C 21/36

(54) **NAVIGATIONSVORRICHTUNG FÜR EIN FAHRZEUG UND VERFAHREN ZUR ERZEUGUNG EINES ANZEIGESIGNALS FÜR EINE NAVIGATIONSVORRICHTUNG FÜR EIN FAHRZEUG**
NAVIGATION DEVICE FOR A VEHICLE AND METHOD FOR GENERATING A DISPLAY SIGNAL FOR NAVIGATION DEVICE FOR VEHICLE
DISPOSITIF DE NAVIGATION D'UN VÉHICULE ET PROCÉDÉ DE CRÉATION D'UN SIGNAL D'AFFICHAGE POUR UN DISPOSITIF DE NAVIGATION D'UN VÉHICULE

(30) Priorität: 10.01.2013 DE 102013000879
(43) Veröffentlichungstag der Anmeldung: 18.11.2015
(73) Patentinhaber: Volkswagen Aktiengesellschaft, 38440 Wolfsburg (DE)
(72) Erfinder: CENGIL, Sükrü, 30938 Burgwedel (DE)
(86) Internationale Anmeldenummer: PCT/EP2014/050125
(87) Internationale Veröffentlichungsnummer: WO 2014/108387

(56) Entgegenhaltungen:
- EP-A2- 0 897 170
- EP-A2- 1 024 467
- WO-A1-2007/126199
- DE-A1-102006 059 922
- JP-A- 2003 166 836
- US-A1- 2009 109 216

## Beschreibung

Die vorliegende Erfindung liegt auf dem Gebiet der Navigationssysteme und bezieht sich insbesondere auf eine Navigationsvorrichtung für ein Fahrzeug und ein Verfahren zur Erzeugung eines Anzeigesignals für eine Navigationsvorrichtung für ein Fahrzeug.

Es existiert eine Vielzahl von Navigationssystemen zur Anzeige von Fahrt- oder Flugrouten. Derartige Navigationssysteme umfassen beispielsweise eine Anzeigevorrichtung in Form eines Displays, auf welchem ein Ausschnitt einer Land- bzw. Straßenkarte basierend auf digitalen Geodaten, oder topografischen Daten, dargestellt werden kann. Üblicherweise zeigt das Display im Wesentlichen den Verlauf der Straßen und Wege innerhalb des dargestellten Kartenausschnitts sowie Merkmale der Umgebung, wie beispielsweise Umrisse von anliegenden Gebäuden, Stadteile oder bewaldeten Gebieten. Herkömmlicherweise können dreidimensionale Geodaten mit Navigationssystemen zweidimensional dargestellt werden.

Es ist jedoch häufig so, dass in bestimmten Darstellungsmodi, wie z.B. die 3D-Darstellung, eine Vorschau der Zielführung um einen Gebäudeblock oder ganze Areale aufgrund der Perspektive und der Höhe der Gebäude nicht gut oder gar nicht gegeben ist. Meist sind solche Darstellungen nur sehr rudimentär. Manche Systeme bieten dazu eine Art Transparenzmodus an, sodass man durch die Gebäude durchschauen kann. Dies bringt jedoch einige Nachteile mit sich, wie z.B. die Überlagerung von zu vielen Gebäudeflächen, was wiederum verwirren kann. Die für die Navigation oder Zielführung notwendigen Informationen können also gerade auf der meist begrenzten Anzeigefläche eines Navigationssystems nicht in ausreichendem Detail dargestellt werden. Es wird also nur eine unzureichende Information bezüglich der Navigation oder Zielführung angeboten, wodurch auch die Nutzungssicherheit und Nutzungszuverlässigkeit sinkt, da der Benutzer nur sehr spät erkennen kann, in welche Richtung der weitere Weg bis zu seinem Ziel verläuft oder der Benutzer sehr lange auf die Anzeigefläche sehen muss, um sich zu orientieren und so vom Verkehr abgelenkt sein kann.

Die Druckschrift DE 69729684 zeigt eine Veränderung von Höhen von Kartenobjekten in einer Navigationskarte in einem bestimmten Bereich der Navigationskarte.

DE 10 2006 O59 922 A1 lehrt ein Verfahren zum Darstellen eines Kartenausschnittes in einem Navigationssystem. Die Schrift betrifft ein Verfahren zum Darstellen eines Kartenausschnittes in einem Navigationssystem für ein Kraftfahrzeug, bei dem in dem Kartenausschnitt zusätzlich zur Darstellung eines Straßennetzes weitere Objekte angezeigt werden.

WO 2007/126199 A1 lehrt ein Navigationssystem, das navigatorische Hintergrundinformation bereitstellt. Es wird eine Methode zur Bereitstellung von navigatorischen Hintergrundinformation gelehrt und ein Navigationssystem zur dessen Nutzung.

EP 1 024 467 A2 lehrt eine stereoskope Kartenanzeigemethode. Insbesondere wird eine stereoskope Kartenanzeige in einem Navigationssystem genutzt, die Straßen und Gebäude um das Fahrzeug herum anzeigt.

Es besteht der Bedarf, eine Navigationsvorrichtung für ein Fahrzeug zu schaffen, die eine Erhöhung der Nutzungssicherheit, der Nutzungszuverlässigkeit und/oder der Informationsdichte von benötigten Informationen ermöglicht.

Diesem Bedarf trägt eine Navigationsvorrichtung für ein Fahrzeug gemäß Anspruch 1, ein Verfahren zur Erzeugung eines Anzeigesignals für eine Navigationsvorrichtung für ein Fahrzeug gemäß Anspruch 8 und ein Computerprogramm gemäß Anspruch 9 Rechnung.

Bei der erfindungsgemäßen Navigationsvorrichtung handelt es sich um eine Navigationsvorrichtung für ein Fahrzeug mit einem Datenbereitsteller und einem Prozessor. Der Datenbereitsteller ist ausgelegt, um Daten einer dreidimensionalen Navigationskarte mit hochragenden Kartenobjekten bereitzustellen. Ferner ist der Prozessor ausgelegt, um basierend auf einer ermittelten Position eines Fahrzeugs Daten einer dreidimensionalen Navigationskarte mit hochragenden Kartenobjekten einer Umgebung des Fahrzeugs von dem Datenbereitsteller zu erhalten und ein die Navigationskarte repräsentierendes Anzeigesignal für eine Anzeigeeinrichtung zur Wiedergabe der Navigationskarte bereitzustellen. Zusätzlich ist der Prozessor ausgelegt, um das Anzeigesignal zu erzeugen, sodass die Navigationskarte aus einer von der ermittelten Position des Fahrzeugs abhängigen, über der Navigationskarte angeordneten Ansichtsposition betrachtet durch die Anzeigeeinrichtung wiedergebbar ist. Ferner ist der Prozessor ausgelegt, um eine Höhe eines hochragenden Kartenobjekts in der Navigationskarte in Abhängigkeit von einem Abstand des hochragenden Kartenobjekts zu der Ansichtsposition dynamisch zu verändern. Zusätzlich ist der Prozessor ausgelegt ist, um das Anzeigesignal zu erzeugen, sodass ein Objekt von Interesse hervorgehoben dargestellt wird, wobei sich das Objekt von Interesse in einem Bereich der Navigationskarte mit Kartenobjekten mit veränderten Höhen befindet.

Durch das dynamische Verändern der Höhen von hochragenden Kartenobjekten in der Navigationskarte können von der Ansichtsposition weiter entfernte Bereiche der Navigationskarte für den Benutzer leicht überschaubar dargestellt werden. Dadurch kann beispielsweise eine Zielführung auf der Navigationskarte (also der eingezeichnete Weg zum gewünschten Ziel) für den Benutzer sichtbar dargestellt werden, auch wenn der Weg um hohe Gebäude oder Geländeunebenheiten führt, die den Weg zum Ziel ohne das Verändern der Höhe (z.B. Reduzieren der Höhe) verdecken würden. Ferner kann zusätzlich ein Objekt von Interesse eingeblendet oder hervorgehoben dargestellt werden, das sonst nicht sichtbar wäre.

Dadurch kann die Informationsdichte an vom Benutzer benötigten Informationen, die durch eine Anzeigeeinrichtung basierend auf dem Anzeigesignal wiedergegeben werden kann, deutlich erhöht werden. Ferner kann beispielsweise die Nutzungssicherheit und/oder die Nutzungszuverlässigkeit der Navigationsvorrichtung erhöht werden, da ein Benutzer frühzeitig erkennen kann, in welche Richtung der Weg zu seinem Ziel führt.

Erfindungsgemäß ist das Objekt von Interesse ein Gebäude von Interesse. Durch die Veränderung der Höhe von anderen Kartenobjekten kann das Gebäude von Interesse für den Benutzer leicht erkennbar dargestellt werden. Dadurch kann beispielsweise die Nutzungssicherheit und/oder die Nutzungszuverlässigkeit der Navigationsvorrichtung erhöht werden.

Bei einigen Ausführungsbeispielen verändert der Prozessor die Höhe des hochragenden Kartenobjekts durch eine Multiplikation zumindest eines von dem Datenbereitsteller erhaltenen oder von dem Prozessor berechneten Höhenparameters des hochragenden Kartenobjekts mit einem von dem Abstand des hochragenden Kartenobjekts zu der Ansichtsposition abhängigen Skalierungsfaktor oder durch eine einer solchen Multiplikation entsprechenden Berechnung basierend auf zumindest einem Skalierungsfaktor. Dadurch kann mit geringem Rechenaufwand die Höhe von Kartenobjekten distanz- oder abstandsabhängig verändert werden.

Einige Ausführungsbeispiele beziehen sich auf einen Prozessor, der eine Höhe eines ersten hochragenden Kartenobjekts in einem ersten Abstand von der Ansichtsposition stärker reduziert als eine Höhe eines zweiten hochragenden Objekts in einem zweiten Abstand von der Ansichtsposition, wobei der erste Abstand kleiner ist als der zweite Abstand. Es können also beispielsweise näherliegende Kartenobjekte stärker in ihrer Höhe reduziert werden als weiter entfernt liegende, sodass hochragende Kartenobjekte immer weniger Teile der Navigationskarte verdecken, je näher die hochragenden Kartenobjekte zu der Ansichtsposition sind. Dadurch kann einerseits in größerer Entfernung eine dreidimensionale Darstellung ermöglicht werden und andererseits nahe Teile mit hoher Informationsdichte von benötigten oder gewünschten Informationen für den Benutzer (z.B. insbesondere für die Zielführung) bereitgestellt werden, da es zu keiner oder nur geringer Abdeckung von solchen Informationen durch hochragende Kartenobjekte kommen kann.

Einige Ausführungsbeispiele beziehen sich auf ein Fahrzeug mit einer Navigationsvorrichtung nach dem zuvor beschriebenen Konzept.

Nachfolgend werden unter Bezugnahme auf die beiliegenden Figuren Ausführungsbeispiele näher erläutert. Es zeigen:
Fig. 1 ein Blockdiagramm einer Navigationsvorrichtung für ein Fahrzeug;
Fig. 2 eine schematische Darstellung einer möglichen tangentialen Interpolation;
Fig. 3 eine schematische Darstellung einer möglichen linearen Interpolation;
Fig. 4 eine schematische Darstellung von Skalierungsfaktoren in unterschiedlichen Abständen zur Ansichtsposition;
Fig. 5 eine schematische Darstellung einer Navigationskarte mit hochragenden Kartenobjekten;
Fig. 6 eine schematische Darstellung einer Navigationskarte mit hochragenden Kartenobjekten mit reduzierter Höhe im Bereich der Ansichtsposition;
Fig. 7 eine schematische Darstellung einer Navigationskarte mit hochragenden Kartenobjekten mit reduzierter Höhe im Bereich der Ansichtsposition;
Fig. 8 eine schematische Ansicht einer Navigationskarte mit in ihrer Höhe veränderten Kartenobjekten und einem hervorgehobenen Objekt von Interesse;
Fig. 9 eine schematische Ansicht einer Navigationskarte mit in ihrer Höhe veränderten Kartenobjekten und einem hervorgehobenen Objekt von Interesse;
Fig. 10 eine schematische Ansicht einer Etage einer Tiefgarage mit eingeblendeter Fahrtroute zu einem freien Parkplatz;
Fig. 11 eine schematische Ansicht einer Navigationskarte mit in ihrer Höhe veränderten Kartenobjekten und einer hervorgehobenen Baustellenmarkierung;
Fig. 12 ein Blockdiagramm einer Navigationsvorrichtung für ein Fahrzeug; und
Fig. 13 ein Flussdiagramm eines Verfahrens zur Erzeugung eines Anzeigesignals für eine Navigationsvorrichtung für ein Fahrzeug.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

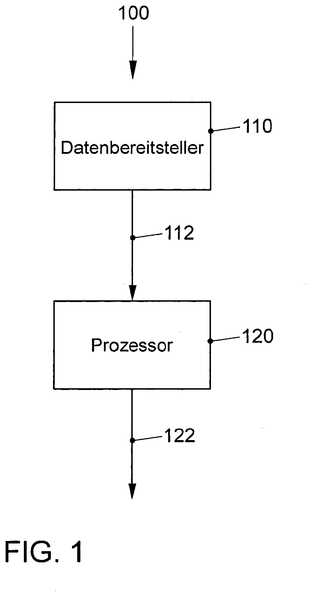

Fig. 1 zeigt ein Blockdiagramm einer Navigationsvorrichtung 100 für ein Fahrzeug entsprechend einem Ausführungsbeispiel. Die Navigationsvorrichtung 100 umfasst einen Datenbereitsteller 110, der mit einem Prozessor 120 verbunden ist. Der Datenbereitsteller 110 stellt Daten 112 einer dreidimensionalen Navigationskarte mit hochragenden Kartenobjekten bereit. Der Prozessor 120 erhält basierend auf einer ermittelten Position eines Fahrzeugs Daten 112 einer dreidimensionalen Navigationskarte mit hochragenden Kartenobjekten einer Umgebung des Fahrzeugs von dem Datenbereitsteller 110 und stellt ein die Navigationskarte repräsentierendes Anzeigesignal 122 für eine Anzeigeeinrichtung zur Wiedergabe der Navigationskarte bereit. Ferner erzeugt der Prozessor 120 das Anzeigesignal 122 so, dass die Navigationskarte aus einer von der ermittelten Position des Fahrzeugs abhängigen, über der Navigationskarte angeordneten Ansichtsposition betrachtet durch die Anzeigeeinrichtung wiedergebbar ist. Zusätzlich verändert (z.B. reduziert) der Prozessor 120 eine Höhe eines hochragenden Kartenobjekts in der Navigationskarte in Abhängigkeit von einem Abstand des hochragenden Kartenobjekts zu der Ansichtsposition dynamisch. Zusätzlich ist der Prozessor 120 ausgelegt ist, um das Anzeigesignal 122 zu erzeugen, sodass ein Objekt von Interesse hervorgehoben dargestellt wird. Dabei befindet sich das Objekt von Interesse in einem Bereich der Navigationskarte mit Kartenobjekten mit veränderten Höhen.

Durch das Verändern der Höhe von hochragenden Kartenobjekten in Abhängigkeit von einem Abstand des hochragenden Objekts zu der Ansichtsposition, was auch als distanzbasierte Höhenregulierung bezeichnet werden kann, können einem Benutzer Informationen (z.B. über die Zielführung) bereitgestellt werden, die in einer Darstellung ohne Veränderung der Höhen von hochragenden Kartenobjekten nicht oder schlechter bereitgestellt werden könnten. Insbesondere bei dreidimensionalen Navigationskarten, die beispielsweise Gebäude oder Geländeunebenheiten aufweisen, können durch das beschriebene Konzept auch Bereiche dargestellt werden, die ansonsten von den Gebäuden oder Geländeunebenheiten verdeckt wären. Da die Anzeigefläche von Navigationssystemen beispielsweise im Vergleich zu Computerbildschirmen oder Fernsehern normalerweise recht klein ist, ist eine Erhöhung der Informationsdichte von benötigten oder gewünschten Informationen auf der Anzeigefläche für den Benutzer äußerst hilfreich. Dadurch kann z.B. dem Fahrer eines Fahrzeugs als Benutzer der Navigationsvorrichtung 100 ermöglicht werden, bei einer Zielführung die noch zurückzulegende Wegstrecke (und insbesondere den näherliegenden Teil der noch zurückzulegenden Wegstrecke) besser zu übersehen und so vor gefährlichen Stellen oder Besonderheiten auf der Wegstrecke früher gewarnt zu werden oder vorrausschauender notwendige Fahrspurwechsel zum Abbiegen vornehmen zu können (z.B. auch wenn eine Sprachführung durch Kinderlärm im Auto oder sonstige Geräuschkulissen schwer möglich ist). Ferner können zusätzliche Objekte von Interesse eingeblendet oder hervorgehoben dargestellt werden, die sonst nicht sichtbar wären. Dadurch kann die Nutzungssicherheit und/oder die Nutzungszuverlässigkeit deutlich erhöht werden, da sich der Benutzer schneller einen Überblick über die Umgebung und/oder eine Zielführung machen kann oder keine oder wenige Einstellungen vornehmen muss, um sich die nötigen Informationen zu besorgen.

Je nach Anwendungsgebiet der Navigationsvorrichtung 100 kann das Fahrzeug beispielsweise ein Motorrad, ein Personenkraftwagen oder ein Lastkraftwagen sein. Der Benutzer der Navigationsvorrichtung 100 kann beispielsweise entsprechend ein Fahrer eines Fahrzeugs sein. Die Navigationsvorrichtung 100 kann ein tragbares oder ein festinstalliertes System sein.

Der Datenbereitsteller 110 stellt Daten 112 einer dreidimensionalen Navigationskarte bereit. Dabei kann der Datenbereitsteller 110 beispielsweise eine Speichereinheit (z.B. Festplatte, Speicherkarte, interner Speicher oder ein CD- oder DVD-Laufwerk) oder eine Schnittstelle der Navigationsvorrichtung 100 zum Verbinden mit einer internen oder externen Speichereinheit sein. Die Navigationskarte kann durch Daten 112, die die Navigationskarte repräsentieren (z.B. dreidimensionale Koordinaten von Punkten oder Objekten der Navigationskarte) bereitgestellt werden. Die Daten 112 können dabei beispielsweise je nach gewähltem Übertragungsprotokoll durch geeignete Signale bereitgestellt werden. Beispielsweise kann der Datenbereitsteller 110 auch eine drahtlose Schnittstelle zum Empfang von Daten aus dem Internet sein, sodass die Daten 112 der Navigationskarte auch über das Internet bereitgestellt werden können.

Die wiederzugebende Navigationskarte kann beispielsweise ein Ausschnitt einer Land- oder Straßenkarte basierend auf digitalen Geodaten, oder topografischen Daten, sein. Z.B. kann ein Verlauf von Straßen und Wegen innerhalb des dargestellten Kartenausschnitts sowie Merkmale der Umgebung, wie beispielsweise Umrisse von anliegenden Gebäuden (als Beispiel für ein hochragendes Kartenobjekt), Stadteile oder bewaldeten Gebieten wiedergegeben werden. Ferner kann eine Zielführung, also eine Markierung oder Hervorhebung eines Weges zu einem gewünschten Ziel, eingeblendet werden.

Eine dreidimensionale Navigationskarte weist beispielsweise eine Lageinformation von Punkten oder Objekten der Navigationskarte relativ zueinander in allen drei Raumrichtungen eines Koordinatensystems auf (z.B. mit Ursprung an der Position des Fahrzeugs oder mit Ursprung bei der Ansichtsposition oder einem beliebig anderen vordefinierten Punkt). Meist weist die Navigationskarte eine deutlich größere Ausdehnung in ihrer Länge und Breite als in ihrer Höhe auf. Beispielsweise können Straßen und Wege der Navigationskarte in einer Ebene liegen (z.B. in einer Referenzebene angeordnet sein) und Objekte (z.B. Gebäude) aus dieser Ebene hochragen. Eine Höhe eines hochragenden Kartenobjekts kann sich beispielsweise auf einen Abstand in vertikaler Richtung zu einer Ebene einer Straße, auf der sich das bewegliche Objekt (Fahrzeug) befindet, oder zu einer Referenzebene beziehen.

Die Ansichtsposition ist beispielsweise ein Punkt aus dem die Navigationskarte betrachtet wird. Die Ansichtsposition befindet sich z.B. in einem definierten Abstand über der Navigationskarte oder an einer definierten Koordinate in einem dreidimensionalen Bezugssystem auf das sich auch die Lage der Punkte der Navigationskarte bezieht. Die Position oder Lage der Ansichtsposition in Bezug auf die Navigationskarte kann sich beispielsweise entsprechend einer Bewegung des Fahrzeugs relativ zu der Navigationskarte verändern. Unabhängig von einer solchen Bewegung kann z.B. eine Lage der Ansichtsposition (z.B. in Form von dreidimensionalen Koordinaten) zu jeder Zeit festgestellt werden oder ist z.B. zu jeder Zeit bekannt. Durch die Ansichtsposition wird beispielsweise die Perspektive festgelegt aus der die Navigationskarte betrachtet wird (z.B. Vogelperspektive über der ermittelten Position des Fahrzeugs).

Beispielsweise ist die gesamte von der Ausgabeeinrichtung wiederzugebende Navigationskarte mit den abstandsbasierten, höhenveränderten Kartenobjekten aus der Ansichtsposition betrachtet durch die Anzeigeeinrichtung wiedergebbar.

Ein hochragendes Kartenobjekt kann beispielsweise ein Gebäude, eine Geländeunebenheit (z.B. ein Berg) oder ein anderes Objekt der Navigationskarte sein, das sich über das Niveau (z.B. eine Straße) auf dem sich das bewegliche Objekt befindet, erhebt. Dabei kann beispielsweise alles als hochragendes Objekt angesehen werden, was sich über dem Niveau des Fahrzeugs befindet oder nur Kartenobjekte, die eine Höhe von mehr als eine vordefinierte (Mindest-) Höhe aufweisen.

Eine Höhe eines Kartenobjekts kann sich beispielsweise auf eine Höhe über Straßenniveau oder über einer Referenzebene beziehen, auf die sich die vertikalen Koordinaten von Kartenobjekten oder Punkten der Navigationskarte beziehen.

Der Prozessor 120 erhält von dem Datenbereitsteller 110 Daten 112 einer dreidimensionalen Navigationskarte einer Umgebung des Fahrzeugs basierend auf einer ermittelten Position des Fahrzeugs. Die Position des Fahrzeugs kann beispielsweise durch einen Positionsbestimmer, wie z.B. ein GPS-System (Global Positioning System) oder ein anderes Lokalisierungssystem, ermittelt werden und entweder dem Datenbereitsteller 110 (der dann die entsprechenden Kartendaten an den Prozessor bereitstellt) oder dem Prozessor 120 (der dann entsprechende Kartendaten beim Datenbereitsteller anfordert) bereitstellen. Der Positionsbestimmer kann dabei Teil der Navigationsvorrichtung 100 (z.B. bei einem tragbaren Navigationssystem für Fahrzeuge) oder eine externe Komponente (z.B. bei Fahrzeugen oder ferngesteuerten Objekten) sein. Die Daten 112 der Navigationskarte umfassen Informationen über die nähere Umgebung des Fahrzeugs (z.B. Kartenausschnitt, der die Umgebung in einem vordefinierten Umkreis um die Ansichtsposition zeigt), sodass der Benutzer erkennen kann wie er sich oder das bewegliche Objekt (Fahrzeug) sich bewegen kann, um ein gewünschtes Ziel zu erreichen.

Der Prozessor 120 erzeugt ein die Navigationskarte repräsentierendes Anzeigesignal 122 und stellt dieses für eine Wiedergabe der Navigationskarte durch eine Anzeigeeinrichtung bereit. Ein solches Anzeigesignal 122 kann beispielsweise ein Videosignal oder ein Steuersignal sein. Das Anzeigesignal 122 kann in einem Format bereitgestellt werden, das von der jeweiligen Anzeigeeinrichtung zur Wiedergabe von Informationen (z.B. in Form von Bildern) verarbeitet werden kann.

Die Anzeigeeinrichtung kann optional Teil der Navigationsvorrichtung 100 (z.B. bei tragbaren Navigationssystemen) oder eine externe Komponente, an die die Navigationsvorrichtung 100 angeschlossen werden kann, sein.

Der Prozessor 120 erzeugt das Anzeigesignal 122, sodass ein Objekt von Interesse in einem Bereich der Navigationskarte mit Kartenobjekten mit veränderten Höhen hervorgehoben dargestellt wird. Der Bereich der Navigationskarte mit Kartenobjekten mit veränderten Höhen erstreckt sich beispielsweise in der Nähe oder rund um die Ansichtsposition.

Eine Hervorhebung des Objekts von Interesse kann beispielsweise durch eine farbig hervorstechende Darstellung (z.B. bunt an Stelle von grau), durch eine hellere Darstellung als die Umgebung (z.B. als benachbarte Kartenobjekte) und/oder eine dreidimensionale Darstellung oder Animation (z.B. in Kontrast zu einer zweidimensionalen Umgebung oder eine nicht animierten Umgebung) erfolgen.

Beispielsweise kann der Prozessor 120 hochragende Kartenobjekte mit einem Abstand von der Ansichtsposition von weniger als einem vordefinierten maximalen Abstand in ihrer Höhe reduzieren. Das hervorgehobene Objekt von Interesse weist dann beispielsweise einen Abstand von der Ansichtsposition von weniger als dem vordefinierten maximalen Abstand auf. Durch das Reduzieren der Höhe der Kartenobjekte rund um das Objekt von Interesse kann die Hervorhebung des Objekts von Interesse betont werden.

Optional kann der Prozessor 120 die meisten (z.B. mehr als 50%, mehr als 70% oder mehr als 90%) oder alle hochragenden Kartenobjekte mit einem Abstand von der Ansichtsposition von weniger als einem vordefinierten maximalen Abstand mit Ausnahme des Objekts von Interesse in ihrer Höhe reduzieren.

Erfindungsgemäß ist das Objekt von Interesse ein Objekt einer Objektkategorie von Interesse Die Objektkategorie von Interesse enthält Parkgebäude für Fahrzeuge. Zum Beispiel kann eine Objektkategorie von Interesse vom Datenbereitsteller gespeicherte Parkgebäude für Fahrzeuge umfassen.

Erfindungsgemäß ist das Objekt von Interesse, das am nähesten an einer bevorzugten Fahrtroute liegende oder das am schnellsten von einer bevorzugten Fahrtroute erreichbare Objekt von Interesse der Objekte der Objektkategorie von Interesse.

Erfindungsgemäß ist das Objekt von Interesse ein Parkgebäude von Interesse. Der Prozessor 120 kann das Parkgebäude von Interesse durch schematische Darstellung seiner Etagen einblenden oder animieren und dadurch hervorgehoben darstellen. Zusätzlich können die Etagen farblich oder in ihrer Helligkeit gegenüber der Umgebung hervorgehoben werden.

Erfindungsgemäß ist das Parkgebäude von Interesse ein Parkgebäude für Fahrzeuge. Der Prozessor 120 erzeugt das Anzeigesignal 122, sodass eine Etage des Parkgebäudes mit freien Parkplätzen eingeblendet wird. Dadurch kann der Benutzer beispielweise bei Annäherung an das Parkgebäude schon erkennen, ob oder wo freie Parklätze vorhanden sind.

Optional kann der Prozessor 120 das Anzeigesignal 122 erzeugen, sodass eine Fahrtroute zu einem freien Parkplatz mit kürzestem Fußweg zu einem Ausgang des Parkgebäudes aller freien Parkplätze zumindest einer Etage des Parkgebäudes oder des gesamten Parkgebäudes eingeblendet wird. Dadurch kann der Fußweg für den Benutzer verringert werden.

Das Parkgebäude kann beispielsweise eine Tiefgarage sein. Der Prozessor 120 kann dann das Anzeigesignal 122 erzeugen, sodass die unterirdischen Etagen der Tiefgarage überirdisch angezeigt werden. Dadurch kann beispielsweise auch eine eigentlich unter der Ebene der Navigationskarte befindliche Tiefgarage für den Benutzer leicht erkennbar dargestellt werden.

Ergänzend zu dem einen Objekt von Interesse kann der Prozessor 120 optional das Anzeigesignal 122 erzeugen, sodass zusätzlich ein Objekt von Interesse außerhalb des Bereichs der Navigationskarte mit Kartenobjekten mit veränderten Höhen hervorgehoben dargestellt wird. Zum Beispiel kann ein Objekt (z.B. ein Pfeil) eingeblendet werden, der auf die Position der Zieladresse der navigationsunterstützten Fahrt deutet, auch wenn die Zieladresse von hochragenden Kartenobjekten verdeckt ist. Dadurch kann sich beispielsweise der Benutzer bereits früh grob orientieren.

Der Prozessor 120 verändert eine Höhe eines hochragenden Kartenobjekts in Abhängigkeit von einem Abstand des hochragenden Objekts zu der Ansichtsposition dynamisch. Die Höhe eines hochragenden Kartenobjekts (z.B. ein Gebäude) kann beispielsweise eine maximale Ausdehnung des Kartenobjekts in vertikaler Richtung (z.B. die Höhenkoordinate des höchstliegenden Punkts des Kartenobjekts in dem Bezugskoordinatensystem der Navigationskarte), der vertikale Abstand eines geometrischen Schwerpunkts des Kartenobjekts von einer Bezugshöhe oder ein anderer das hochragende Kartenobjekt in seiner vertikalen Ausdehnung charakterisierender Wert sein. Beispielsweise kann die Höhe eines Gebäudes durch die Distanz zwischen Straßenniveau (oder Höhenniveau des Fahrzeugs) und höchstem Punkt des Gebäudes definiert sein oder einfach die Höhenkoordinate des höchsten Punkts des Gebäudes sein (was beispielsweise zum selben Ergebnis führt, wenn das Bezugskoordinatensystem für die vertikale Koordinate den Nullpunkt auf Straßenniveau hat). Der Prozessor 120 kann für die abstandsabhängige oder distanzbasierte Höhenveränderung oder Höhenregulierung des Kartenobjekts den Abstand zwischen der Ansichtsposition und dem hochragenden Kartenobjekt bestimmen. Dieser Abstand kann beispielsweise ein Abstand zwischen der Ansichtsposition und einem Bezugspunkt des hochragenden Objekts, wie z.B. der geometrische Schwerpunkt, der höchstliegende Punkt, der zur Ansichtsposition nächstliegende Punkt oder ein anderer dem hochragenden Kartenobjekt eindeutig zuordenbarer Punkt sein. Beispielsweise kann dieser Bezugspunkt des hochragenden Kartenobjekts bereits mit der Navigationskarte vom Datenbereitsteller 110 zur Verfügung gestellt werden oder vom Prozessor 120 bestimmt werden.

Der Prozessor 120 kann die Höhe des hochragenden Kartenobjekts abstandsabhängig dynamisch verändern. Durch diese dynamische Veränderung kann der Prozessor 120 auch eine Bewegung des Fahrzeugs berücksichtigen. Durch eine Bewegung des Fahrzeugs kann sich der Abstand zwischen dem hochragenden Kartenobjekt und der Ansichtsposition (die sich beispielsweise entsprechend dem Fahrzeug bewegt) verändern. Z.B. kann der Prozessor 120 die Höhe des hochragenden Kartenobjekts immer stärker reduzieren, wenn sich die Ansichtsposition auf das hochragende Kartenobjekt zubewegt, also der Abstand des hochragenden Objekts zu der Ansichtsposition kleiner wird.

Der Prozessor 120 kann die Höhe eines hochragenden Kartenobjekts auf unterschiedliche Arten verändern. Der Prozessor 120 kann die Höhe des hochragenden Kartenobjekts beispielsweise verändern, indem er die Höhe des hochragenden Kartenobjekts (im Vergleich zu einer unveränderten Höhe des hochragenden Kartenobjekts) reduziert (oder aber auch erhöht). Insbesondere kann der Prozessor 120 die Höhe eines hochragenden Kartenobjekts in Abhängigkeit von dem Abstand des hochragenden Kartenobjekts zu der Ansichtsposition dynamisch reduzieren.

Allgemein kann beispielsweise ein Kartenobjekt, das näher an der Ansichtsposition ist, (also einen kleineren Abstand hat) stärker in seiner Höhe reduziert werden als ein Kartenobjekt, das weiter von der Ansichtsposition entfernt ist (also einen größeren Abstand hat). Diese stärkere Reduktion in der Höhe kann sich auf einen Absolutbetrag beziehen, insbesondere kann sich die Reduktion der Höhe jedoch prozentuell auf die ursprüngliche Höhe beziehen, sodass ein Kartenobjekt beispielsweise durch einen kleineren Skalierungsfaktor stärker reduziert wird. In anderen Worten, der Prozessor 120 kann eine Höhe eines ersten hochragenden Kartenobjekts in einem ersten Abstand von der Ansichtsposition stärker reduzieren als eine Höhe eines zweiten hochragenden Kartenobjekts in einem zweiten Abstand von der Ansichtsposition, wenn der erste Abstand kleiner ist als der zweite Abstand. Dadurch können gerade jene Kartenobjekte, die durch ihre Nähe zur Ansichtsposition sehr viel von der restlichen Navigationskarte verdecken, stärker reduziert werden als weiter entfernte Kartenobjekte, die ohnehin weniger der restlichen Navigationskarte verdecken.

Beispielsweise kann der Prozessor 120 das hochragende Kartenobjekt um einen abstandsabhängigen Faktor verkleinern. In anderen Worten, der Prozessor 120 kann beispielsweise die Höhe des hochragenden Kartenobjekts durch eine Multiplikation zumindest eines von dem Datenbereitsteller erhaltenen oder von dem Prozessor errechneten Höhenparameter (z.B. geometrische Schwerpunkt oder höchster Punkt) des hochragenden Kartenobjekts mit einem von dem Abstand des hochragenden Kartenobjekts zu der Ansichtsposition abhängigen Skalierungsfaktor verändern. Dadurch kann mit geringem Rechenaufwand eine distanzbasierte Höhenregulierung von hochragenden Kartenobjekten realisiert werden.

Eine Reduktion der Höhe eines Kartenobjekts entsprechend einem Skalierungsfaktor kann in Bezug auf die ursprüngliche Höhe eines Kartenobjekts gesehen werden. Beispielsweise kann ein Skalierungsfaktor von 0,5 bedeuten, dass das Kartenobjekt auf 50 Prozent seiner Höhe reduziert wird, ein Skalierungsfaktor von 0, dass das Kartenobjekt in seiner Höhe auf 0 reduziert wird (also zweidimensional dargestellt wird), oder ein Skalierungsfaktor von 1, dass das Kartenobjekt seine ursprüngliche Höhe beibehält. Durch die relative Höhenveränderung basierend auf einem Skalierungsfaktor kann ein Höhenunterschied zwischen unterschiedlichen Kartenobjekten proportional erhalten bleiben.

Durch die Wahl und Festlegung von abstandsabhängigen Skalierungsfaktoren kann festgelegt werden wie stark, ab welchem Abstand und/oder bis zu welchem Abstand die Höhe von hochragenden Kartenobjekten verändert werden soll. Beispielsweise können für unterschiedliche Abstände zur Ansichtsposition unterschiedliche Skalierungsfaktoren festgelegt werden. Zwischen benachbarten Skalierungsfaktoren (Skalierungsfaktoren zu Abständen zwischen denen kein weiterer Skalierungsfaktor definiert ist) kann z.B. interpoliert werden. So kann es beispielsweise ausreichend sein einen Skalierungsfaktor für einen maximalen Abstand, bis zu welchem die Höhe von hochragenden Kartenobjekten verändert werden soll, und/oder einen kleinsten Abstand (der auch 0 sein kann), ab welchem die Höhe von hochragenden Kartenobjekten verändert werden soll, festzulegen. Es können jedoch auch mehr als zwei Skalierungsfaktoren in unterschiedlichen Abständen definiert werden, um ein gewünschtes abstandsabhängiges Skalierungsprofil zu realisieren.

Beispielsweise kann der Prozessor 120 eine Höhe eines hochragenden Kartenobjekts in einem vordefinierten ersten Abstand (z.B. 0 oder der Abstand zwischen Ansichtsposition und dem nächstliegenden Punkt der Navigationskarte, der Projektion der Ansichtsposition in vertikaler Richtung auf die Navigationskarte oder zur ermittelten Position des Fahrzeugs) von der Ansichtsposition basierend auf einem ersten Skalierungsfaktor (z.B. 0, 0,1, 0,2 oder zwischen 0 und 0,1) verändern und eine Höhe eines hochragenden Kartenobjekts in einem vordefinierten zweiten Abstand (z.B. maximaler Abstand in dem die Höhe verändert werden soll oder nächster Stützpunkt für die Definition eines Skalierungsprofils) von der Ansichtsposition basierend auf einem zweiten Skalierungsfaktor (z.B. 1, 0,9 oder ein Wert zwischen 0,2 und 1,0) verändern und eine Höhe eines hochragenden Objekts mit einem zwischen dem vordefinierten ersten Abstand und dem vordefinierten zweiten Abstand liegenden Abstand von der Ansichtsposition basierend auf einem durch eine Interpolation zwischen dem ersten und dem zweiten Skalierungsfaktor berechenbaren Skalierungsfaktor verändern. Der interpolierte Skalierungsfaktor kann beispielsweise durch den Prozessor 120 berechnet werden oder der Datenbereitsteller 110oder eine separate Speichereinheit (z.B. als Nachschlagetabelle, look-up table) kann eine Vielzahl von Skalierungsfaktoren für unterschiedliche Abstände, die durch eine solche Interpolation berechenbar sind, gespeichert haben und beispielsweise jenen dieser gespeicherten interpolierten Skalierungsfaktoren bereitstellen, der zu einem Abstand gespeichert ist, der jenem Abstand zwischen dem Kartenobjekt und der Ansichtsposition am nächsten ist. So kann mit geringem Rechenaufwand ein weicher Verlauf zwischen unveränderten, hochragenden Kartenobjekten und den am stärksten veränderten Kartenobjekten erfolgen.

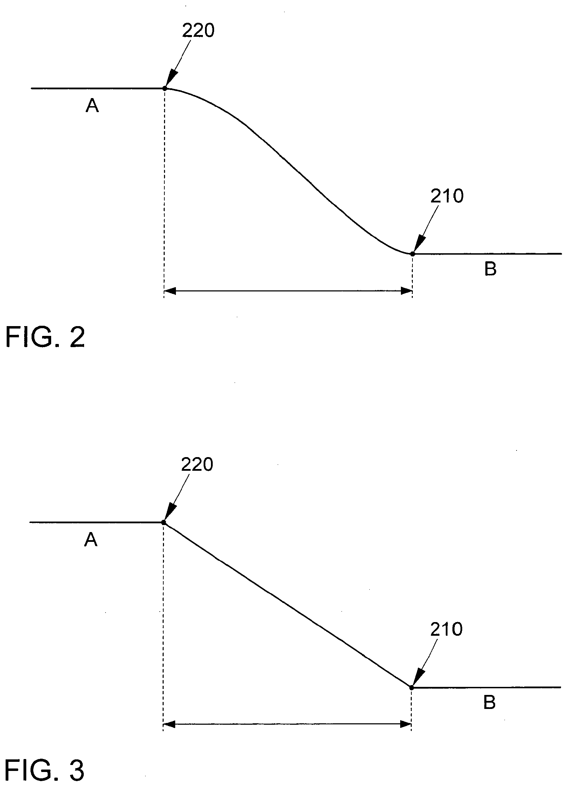

Die Interpolation kann nach einem beliebigen Interpolationsverfahren erfolgen. Ein Beispiel für eine tangentiale Interpolation ist in Fig. 2 gezeigt. Dabei wird zwischen dem ersten Skalierungsfaktor B, der einem vordefinierten ersten Abstand 210 zugeordnet ist, und einem zweiten Skalierungsfaktor A, der einem vordefinierten zweiten Abstand 220 zugeordnet ist, so interpoliert, dass zwischen den konstanten Skalierungsfaktoren A und B ein stetig differenzierbarer Verlauf der interpolierten Skalierungsfaktoren vorhanden sein kann. Für den ersten Abstand 210 und den zweiten Abstand 220 erfolgt ein tangentialer (horizontaler) Anlauf und Auslauf, also ein weicher Verlauf, des Skalierungsprofils. Zwischen dem ersten Skalierungsfaktor B und dem zweiten Skalierungsfaktor A kann also eine automatische Interpolation erfolgen.

Alternativ kann beispielsweise zwischen dem ersten Skalierungsfaktor B und dem zweiten Skalierungsfaktor A eine lineare Interpolation erfolgen, wie sie in Fig. 3 gezeigt ist. Bei konstanter weiterer Skalierung von weiter entfernten Gebäuden (mit Abständen größer als dem zweiten Abstand 220) mit dem zweiten Skalierungswert A und einer weiteren Skalierung von näherliegenden Kartenobjekten als dem ersten Abstand 210 mit dem ersten Skalierungswert B führt dies bei einem linearen Anlauf zu dem zweiten Abstand 220 und einem linearen Auslauf zu dem erstem Abstand 210 hin zu einem harten Übergang (oder einem härteren Übergang als bei tangentialer Interpolation). In dem Bereich zwischen dem ersten Abstand 210 und dem zweiten Abstand 220 kann wiederum automatisch interpoliert werden.

In anderen Worten, der interpolierte Skalierungsfaktor kann durch eine lineare Interpolation zwischen dem ersten und dem zweiten Skalierungsfaktor oder durch eine tangentiale Interpolation zwischen dem ersten und dem zweiten Skalierungsfaktor erfolgen, wobei die tangentiale Interpolation einen stetig differenzierbaren Verlauf aufweist. Durch die Möglichkeit der Realisierung von unterschiedlichen Interpolationsarten kann sehr einfach und flexibel ein gewünschtes Skalierungsprofil realisiert werden. Dadurch kann die Sichtbarkeit von benötigten oder gewünschten Informationen verbessert werden.

Der tangentiale Anlauf und Auslauf der tangentialen Interpolationskurve (Verlauf) kann dazu dienen, dass die Kartenobjekte (z.B. Gebäude) am Anfang weich runter skaliert werden und kurz vor dem Auslauf weich abgebremst werden, damit die Bewegung dynamisch und fließend wirken kann. Der lineare Anlauf und Auslauf der linearen Interpolationskurve kann dazu dienen, dass die Kartenobjekte (z.B. Gebäude) von Anfang bis Ende ohne weichen An- und Auslauf interpoliert werden können.

Die Interpolation von Tangential auf linear oder auf eine andere Interpolationsart kann wahlweise änderbar sein, z.B. abhängig von der Art der Kartenobjekte (z.B. Gebäude). Z.B. kann die Wahl einer Interpolationsart oder ein Umschalten zwischen unterschiedlichen Interpolationsarten in Abhängigkeit von einer Beschaffenheit des Kartenausschnitts, der als Navigationskarte wiedergegeben werden soll, erfolgen. In anderen Worten, der Prozessor 120 kann beispielsweise in Abhängigkeit von einer Benutzereinstellung oder in Abhängigkeit von einer Beschaffenheit der wiederzugebenden Navigationskarte unterschiedliche Interpolationsarten verwenden. Dadurch kann beispielsweise eine weitere Verbesserung der Sichtbarmachung von benötigten oder gewünschten Informationen für unterschiedliche Geländearten (z.B. Stadt oder Land) erreicht werden.

Die Veränderung der Höhe eines hochragenden Kartenobjekts um einen Skalierungsfaktor kann auf unterschiedliche Arten dargestellt werden. Beispielsweise kann entweder das gesamte hochragende Kartenobjekt in seiner vertikalen Richtung verkleinert werden, sodass noch immer das gesamte Kartenobjekt zu sehen ist, es jedoch in vertikaler Richtung verzerrt wird (Kartenobjekt bleibt z.B. in seiner Länge und Breite unverändert), oder das Kartenobjekt kann um einen den Skalierungsfaktor entsprechenden Wert in den Boden verschoben werden, was den über den Boden hinausragenden Teil unverzerrt lassen kann und mit geringem Rechenaufwand realisierbar ist, jedoch zu einer ungewohnten Darstellung führen kann, da der untere Teil des Kartenobjekts in den Boden verschoben wird und nicht mehr sichtbar ist. Ein Kartenobjekt kann beispielsweise in den Boden verschoben werden, indem der danach im Boden verschwindende Teil abgeschnitten wird und nicht mehr vorhanden ist, oder noch vorhanden aber nicht mehr sichtbar ist, da der Boden den unteren Teil des Gebäudes verdeckt. In anderen Worten, der Prozessor 120 kann das Anzeigesignal 122 so erzeugen, dass das hochragende Kartenobjekt entsprechend der Veränderung seiner Höhe in vertikaler Richtung skaliert oder gegenüber an das hochragende Kartenobjekt anschließende Teile der Navigationskarte zumindest teilweise in den Boden verschoben durch die Anzeigeeinrichtung wiedergebbar ist.

Wie bereits erwähnt, kann optional auch eine oder mehrere weitere Stützstellen des Skalierungsprofils definiert werden. So kann beispielsweise in einem vordefinierten dritten Abstand ein dritter Skalierungsfaktor definiert werden, sodass zwischen zweitem und drittem Skalierungsfaktor nach dem gleichen oder einem anderen Interpolationsverfahren, wie zwischen dem ersten und zweiten Skalierungsfaktor interpoliert werden kann. In anderen Worten, der Prozessor 120 kann eine Höhe eines hochragenden Kartenobjekts in einem vordefinierten dritten Abstand von der Ansichtsposition basierend auf einem dritten Skalierungsfaktor verändern und eine Höhe eines hochragenden Objekts mit einem zwischen dem vordefinierten zweiten Abstand und dem vordefinierten dritten Abstand liegenden Abstand von der Ansichtsposition basierend auf einem durch ein Interpolation zwischen dem zweiten und dritten Skalierungsfaktor berechenbaren Skalierungsfaktor verändern. Ergänzend gelten die zuvor gemachten Ausführungen zu dem ersten und zweiten Skalierungsfaktor sowie möglichen Interpolationsverfahren.

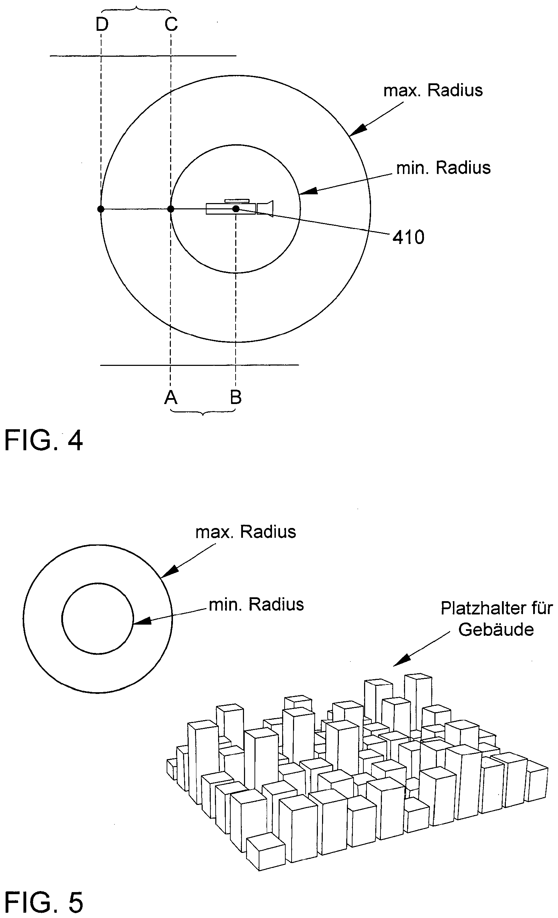

Fig. 4 zeigt eine schematische Darstellung eines Beispiels für die Definition von unterschiedlichen Skalierungsfaktoren in unterschiedlichen Abständen zu einer Ansichtsposition 410. In diesem Beispiel beträgt der vordefinierte erste Abstand 0 und der erste Skalierungsfaktor hat den Wert B am Ort der Ansichtsposition 410 ist eine Kamera angedeutet, um darzustellen, dass aus dieser Position die Navigationskarte betrachtet wird. Im zweiten vordefinierten Abstand, der in diesem Beispiel auch minimaler Radius (min. Radius) genannt wird, hat der Skalierungsfaktor den Wert A. Zwischen dem ersten Skalierungsfaktor B (oder dem ersten Abstand) und dem zweiten Skalierungsfaktor A (oder dem zweiten Abstand) kann wiederum interpoliert werden. Eine erweiterte Kartenobjektskalierung kann zwischen dem zweiten vordefinierten Abstand und dem dritten vordefinierten Abstand, der auch als maximaler Radius (max. Radius) in diesem Beispiel bezeichnet wird, erfolgen. Dabei entspricht der Wert A dem Wert C und stellt den zweiten Skalierungsfaktor dar. Ferner kann ein dritter Skalierungsfaktor mit dem Wert D definiert werden. Zwischen dem zweiten und dritten Skalierungsfaktor kann wiederum interpoliert werden. Die Werte A und B können beispielsweise getrennt von 1 bis 0 einstellbar sein. Der Wert C ist z.B. für die erweiterte Gebäudeskalierung mit dem Wert A verknüpft. Der Wert D kann für die erweiterte Gebäudeskalierung mit einem Wert von 1 bis 0 beliebig einstellbar sein. Es kann jedoch sinnvoll sein, den dritten Skalierungsfaktor D größer als den zweiten Skalierungsfaktor A/C zu wählen. Bei den Skalierungswerten bedeutet beispielsweise 1 die Originalhöhe und 0 die niedrigste Höhe. Fig. 4 veranschaulicht beispielsweise eine Funktionsbeschreibung der Werte min. und max. Radius für eine distanzbasierte Höhenregulierung.

Beispielsweise kann der erste Skalierungsfaktor kleiner als 0,1 (z.B. 0), der zweite Skalierungsfaktor zwischen 0,7 und 0,8 und der dritte Skalierungsfaktor größer als 0,9 (z.B. 1) gewählt werden. Genauso können die Skalierungsfaktoren auch in Prozent oder einer anderen geeigneten Einheit angegeben werden.

Durch die Wahl eines vordefinierten max. Abstands (Radius), bis zu dem Kartenobjekte in ihrer Höhe reduziert werden sollen, kann eingestellt werden, bis wohin eine Verdeckung von Kartenteilen durch hochragende Kartenobjekte verhindert oder reduziert werden soll. Durch Wahl eines großen vordefinierten max. Abstands kann die Sichtbarkeit von benötigten oder erwünschten Informationen weit im Voraus ermöglicht werden, jedoch wird der dreidimensionale Effekt der Karte stark reduziert. Umgekehrt kann durch einen kleinen vordefinierten max. Abstand der dreidimensionale Karteneffekt erhöht werden, wodurch aber auch die Abdeckung durch Kartenobjekte vergrößert wird. In anderen Worten, der Prozessor 120 kann hochragende Kartenobjekte mit einer Höhe von mehr als einer vordefinierten Höhe (z.B. alles höher als 1 Meter oder 2 Meter über Straßenniveau, um den Rechenaufwand gering zu halten) und/oder einem Abstand von der Ansichtsposition von weniger als einem vordefinierten max. Abstand (z.B. innerhalb eines max. Radius) in ihrer Höhe reduzieren. Beispielsweise kann jedes hochragende Kartenobjekt mit einer Höhe von mehr als der vordefinierten Höhe innerhalb eines Radius mit dem vordefinierten max. Abstand um die Ansichtsposition in seiner Höhe reduziert werden. Dadurch kann eine bessere Sicht, nicht nur direkt nach vorne, sondern auch seitlich von der direkten Blickrichtung ermöglicht werden und rundum ein ähnlicher Höhenverlauf von hochragenden Kartenobjekten realisiert werden.

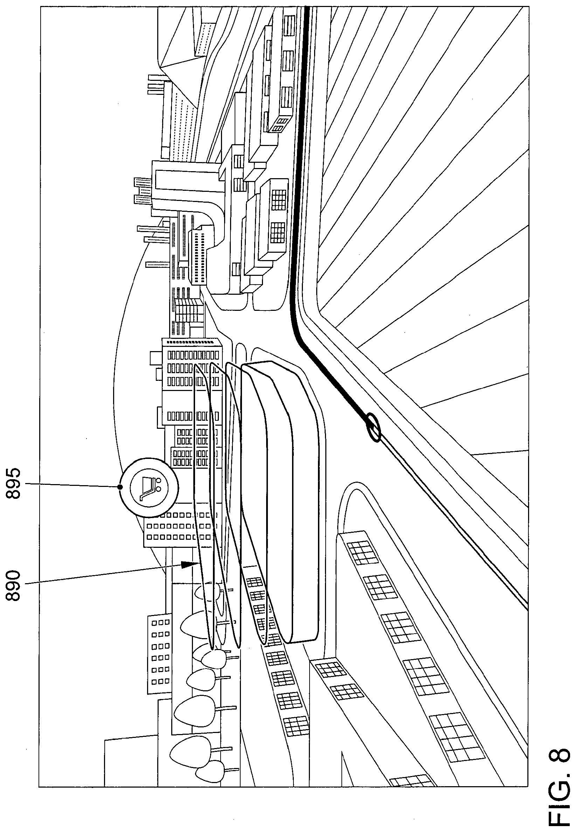

Fig. 8 zeigt ein Beispiel für eine schematische Ansicht einer Navigationskarte mit in ihrer Höhe veränderten Kartenobjekten und einem hervorgehobenen Objekt von Interesse 890 (z.B. Einkaufszentrum). Das Objekt von Interesse (POI, point of interest) kann durch eine animierte Darstellung seiner Etagen und/oder eine farblich andere Gestaltung als die Umgebung sowie eine Erhöhung der Helligkeit gegenüber der direkten Umgebung hervorgehoben dargestellt werden. Ferner kann durch eine Objektmarkierung 895 eine Kategorie des Objekts von Interesse für den Benutzer leicht erkennbar dargestellt werden.

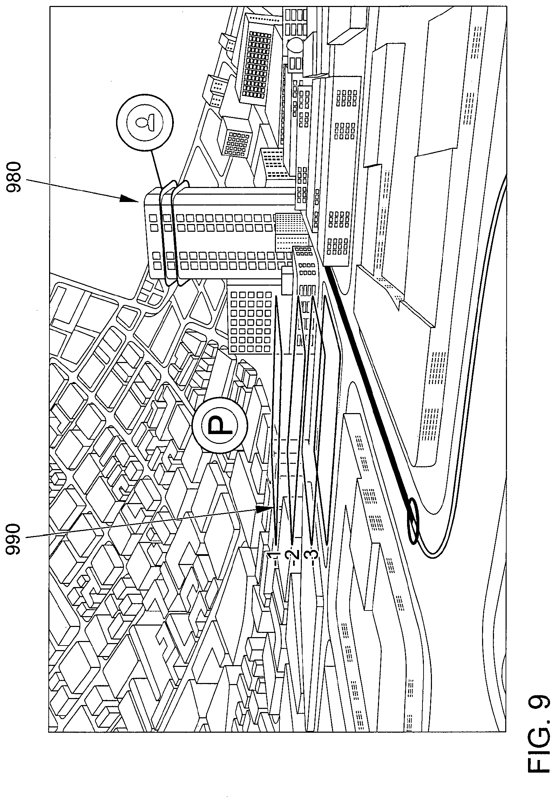

Fig. 9 zeigt ein Beispiel für eine schematische Ansicht einer Navigationskarte mit in ihrer Höhe veränderten Kartenobjekten und einem hervorgehobenen Objekt von Interesse. Dabei ist das hervorgehobene Objekt von Interesse eine Tiefgarage 990 in der Nähe (z.B. nähestes Parkgebäude zu der Zieladresse) der Zieladresse. Die Zieladresse 980 kann beispielsweise durch eine Animation und/oder Darstellung des Zielgebäudes in normaler Höhe (im Vergleich zu den Kartenobjekten mit reduzierter Höhe) und die Tiefgarage 990 durch eine oberirdische Animation und/oder Darstellung ihrer unterirdischen Etagen dargestellt werden.

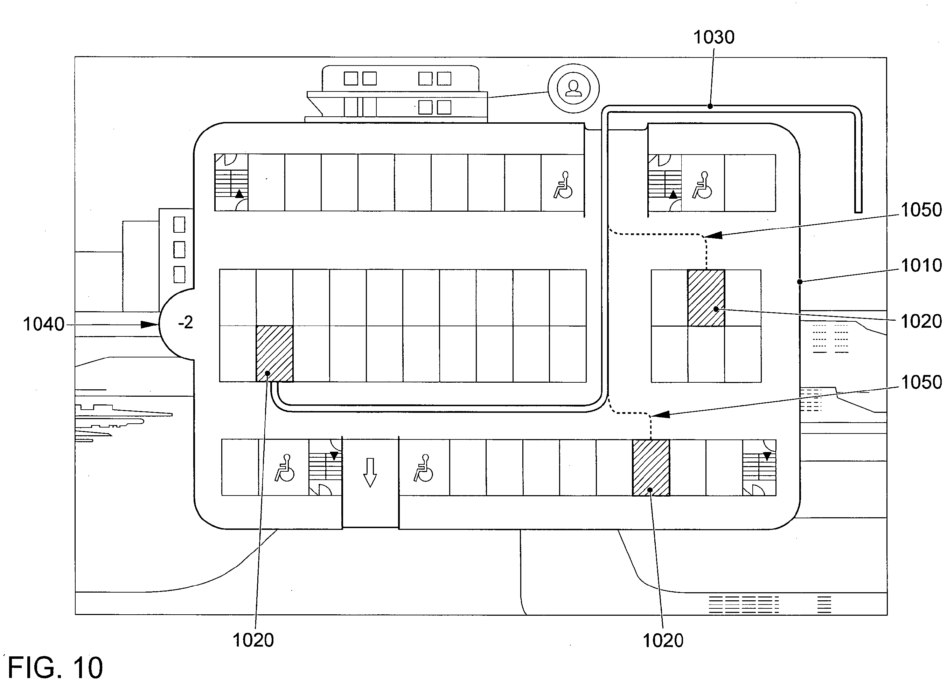

Fig. 10 zeigt ein Beispiel für eine schematische Ansicht einer Etage 1010 einer Tiefgarage mit eingeblendeter Fahrtroute 1030 zu einem freien Parkplatz 1020. Es wird eine Etage 1010 der Tiefgarage mit einem Vorschlag für freie Parkplätze 1020 und mit Angabe der Tiefgargenebene 1040 eingeblendet. Dadurch kann der Benutzer beispielweise bei Annäherung an das Parkgebäude schon erkennen, ob oder wo freie Parklätze vorhanden sind. Dabei kann ein Vorschlag für eine Fahrtroute 1030 zu einem freien Parkplatz 1020 mit kürzestem Weg zu einem Ausgang des Parkgebäudes aller freien Parkplätze 1020 der Etage 1010 der Tiefgarage eingeblendet werden. Dadurch kann der Fußweg für den Benutzer verringert werden. Der Weg zu alternativen Parkplätzen kann beispielsweise durch eine animierte Strichlinie 1050 gekennzeichnet werden.

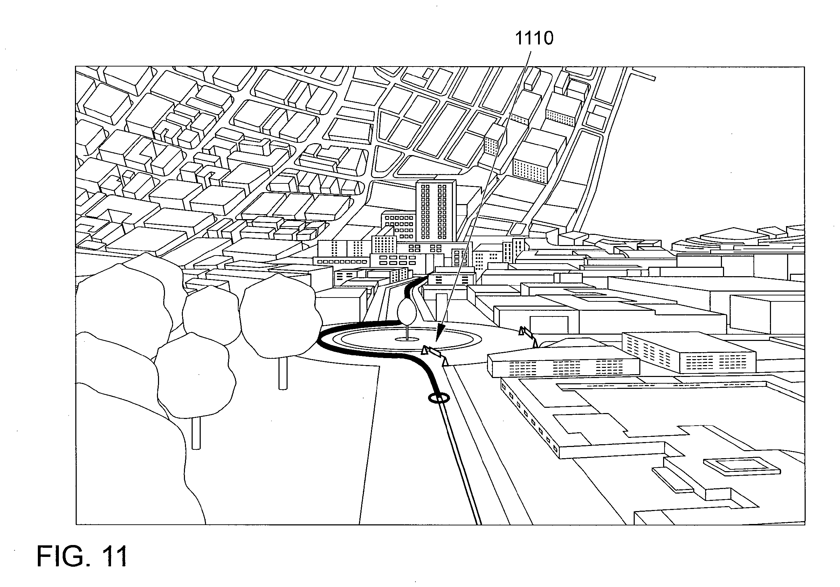

Fig. 11 zeigt ein nicht zu der beanspruchten Erfindung gehörendes Beispiel für eine schematische Ansicht einer Navigationskarte mit in ihrer Höhe veränderten Kartenobjekten und einer hervorgehobenen Fahrtroutenstörungsmarkierung 1110. In dem gezeigten Beispiel ist die Fahrtroutenstörungsmarkierung eine Baustellenmarkierung, die als Straßensperre am Beginn und am Ende einer gesperrten Strecke dargestellt ist. Ferner zeigt die eingeblendete Fahrtroute eine geeignete Baustellenumfahrung. Beispielsweise kann eine ursprünglich Fahrtroute (durch die Baustelle) bis kurz vor Erreichen der Baustelle eingeblendet bleiben und die neue, geeignete Umfahrungsroute zusätzlich eingeblendet sein. So kann sich der Benutzer beispielsweise einfach ein Bild von der veränderten Strecke machen.

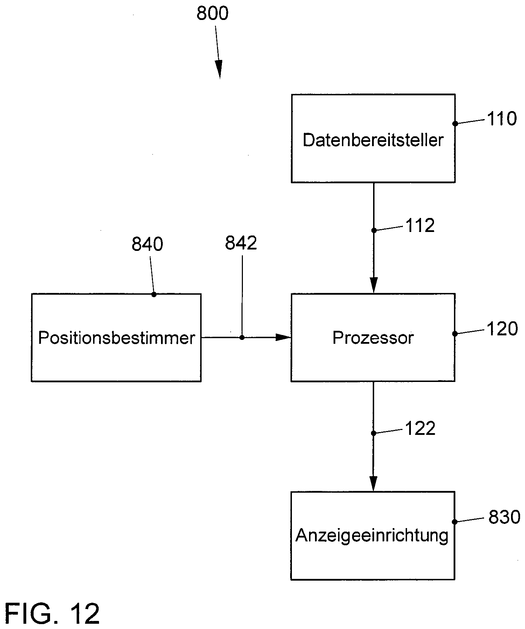

Wie bereits erwähnt, kann in einigen Beispielen die Navigationsvorrichtung optional eine Anzeigeeinrichtung und/oder einen Positionsbestimmer (oder ein Lokalisierungssystem) aufweisen. Fig. 12 zeigt ein Blockdiagramm einer Navigationsvorrichtung 800 entsprechend eines solchen Ausführungsbeispiels. Die Navigationsvorrichtung 800 weist einen ähnlichen Aufbau, wie die Navigationsvorrichtung aus Fig. 1 auf. Insofern gelten ergänzend die zuvor gemachten Ausführungen. Jedoch weist die Navigationsvorrichtung 800 zusätzlich eine Anzeigeeinrichtung 830 auf, die mit dem Prozessor 120 verbunden ist. Ferner weist die Navigationsvorrichtung 800 einen Positionsbestimmer 840 auf, der ebenfalls mit dem Prozessor 120 verbunden ist. Die Anzeigeeinrichtung 830 (z.B. ein Bildschirm, ein berührungsempfindlicher Bildschirm (Touch Screen) oder eine Kopf-Hoch-Anzeige (head-up display)) kann basierend auf dem Anzeigesignal 122 die Navigationskarte auf einer Anzeigefläche für einen Benutzer wiedergeben. Ferner kann der Positionsbestimmer 840 (z.B. GPS-System) eine Position 842 des Fahrzeugs bestimmen und den Prozessor 120 bereitstellen.

Zusätzlich kann die Navigationsvorrichtung 800 einen oder mehrere optionale zusätzliche Aspekte realisieren, die einem oder mehreren Aspekten entsprechen, die in Zusammenhang mit dem beschriebenen Konzept und/oder einem zuvor beschriebenen Beispiel erwähnt wurden.

Allgemein können beispielsweise der Datenbereitsteller 110, der Prozessor 120, die Anzeigeeinrichtung 830 und/oder der Positionsbestimmmer 840 oder andere optionale Einheiten unabhängige Hardwareeinheiten oder Teil eines Computers, eines digitalen Signalprozessors oder eines Mikrokontrollers sein sowie als Computerprogramm oder Softwareprodukt zur Ausführung auf einem Computer, einem digitalen Signalprozessor oder einem Mikrokontroller realisiert sein. Der Datenbereitsteller 110, der Prozessor 120, die Anzeigeeinrichtung 830 und/oder der Positionsbestimmmer 840 oder andere optionale Einheiten können beispielsweise unabhängig voneinander oder zumindest teilweise zusammen (z.B. auf demselben Chip oder durch dasselbe Computerprogramm) realisiert sein.

Einige Ausführungsbeispiele beziehen sich auf ein Fahrzeug mit einer festinstallierten Navigationsvorrichtung nach dem zuvor beschriebenen Konzept.

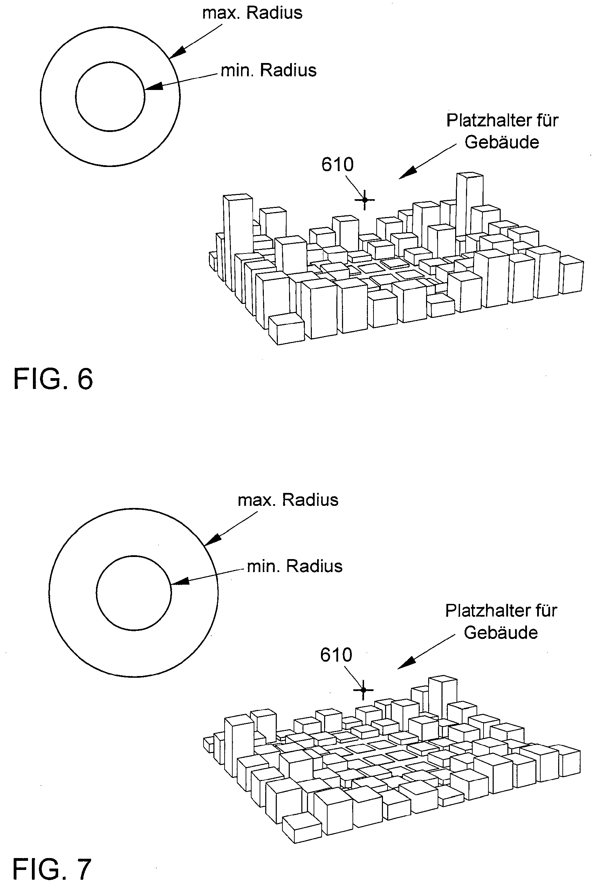

Fig. 5 zeigt ein Beispiel für eine schematische Darstellung einer Navigationskarte mit regelmäßig angeordneten hochragenden Kartenobjekten mit unterschiedlicher Höhe. Jedes dieser quaderförmigen hochragenden Kartenobjekte kann beispielsweise ein Platzhalter für ein Gebäude oder ein anderes hochragendes Kartenobjekt sein. In Fig. 5 ist die Ansichtsposition noch weiter als ein vordefinierter max. Abstand oder max. Radius entfernt, ab welchem die Höhe von Kartenobjekten reduziert wird. Die eingestellten Ausdehnungen eines min. Radius und eines max. Radius (wie es z.B. zu Fig. 4 beschrieben wurde) ist durch die dargestellten Kreise angedeutet. Passend dazu zeigt Fig. 6 ein Beispiel einer Navigationskarte mit hochragenden Kartenobjekten mit reduzierter Höhe bei dem sich die Ansichtsposition 610 über der schematisch dargestellten Navigationskarte befindet. In diesem Beispiel sind Kartenobjekte direkt unter der Ansichtsposition 610 und in der Nähe der Ansichtsposition bis zu einer Höhe von 0 reduziert dargestellt (also zweidimensional dargestellt). Die Reduzierung der Höhe nimmt entsprechend der Einstellung des max. Radius und des min. Radius, also der vordefinierten Abstände und der zugeordneten Skalierungsfaktoren, mit größer werdendem Abstand von der Ansichtsposition 610 ab. Fig. 7 zeigt passend zu Fig. 6 ein Beispiel, bei dem der max. Radius vergrößert wurde, sodass auch Kartenobjekte in größerer Entfernung noch deutlich in ihrer Höhe reduziert werden.

Einige Ausführungsbeispiele beziehen sich auf eine distanzbasierte Höhenregulierung von Gebäuden. Durch das beschriebene Prinzip kann beispielsweise eine bessere Lesbarkeit einer Zielführung einer Navigationskarte erreicht werden. Dabei ist es möglich eine distanzbasierte Skalierung der Häuser zu realisieren. Andererseits kann ebenfalls eine distanzbasierte Höhenverschiebung ermöglicht werden. Um die Zielführung auf weitere Entfernung sehen zu können, können die Hochhäuser für eine vorausschauende Streckenführung skaliert werden. Dies kann durch die distanzbasierte Skalierung erfolgen, da aufgrund der Beschaffenheit der Karte insbesondere die Hochhäuser zu einer Abdeckung anderer Kartenteile führen würden.

Dadurch kann beispielsweise vermieden werden, dass bei aus der Vogelperspektive dargestellten Navigationskarten die meist farblich gekennzeichnete Zielführung durch zu hohe Gebäude verdeckt wird und somit eine vorausschauende Zielführung nicht mehr oder nicht mehr optimal gewährleistet werden kann. Dies kann dadurch verbessert werden, dass man beispielsweise die Hochhäuser bis auch die unterste Etage runterskalieren kann und somit im Allgemeinen die Sicht freimachen kann.

Eine solche Anwendung kann beispielsweise im Rahmen einer Kartendarstellung oder Fahrt für das Auto verwendet werden (dreidimensionale 3D-Navigationsfahrt).

Durch das beschriebene Konzept kann eine distanzbasierte Höhe oder Skalierung realisiert werden. Durch eine distanzbasierte Annäherung der Kamera in den Straßen zu den Gebäuden kann die Sicht des zu fahrenden Weges bezüglich der Überschaubarkeit verbessert werden, indem die umliegenden Gebäude in ihrer Höhenskalierung verändert werden. Die Höhe (Skalierung) der Gebäude kann beispielsweise durch zwei Parameter, z.B. abhängig von dem Gebiet und der Art der Häuser (z.B. Hochhäuser, Ein- oder Mehrfamilienhäuser), veränderbar sein. Z.B. kann für eine Stadt mit Hochhäusern eine starke Skalierung und ein großer max. Radius gewählt werden. Diese Einstellung kann auch beispielsweise automatisch in Abhängigkeit des darzustellenden Gebiets (automatische Parametereinstellung) gewählt werden.

Die distanzbasierte Skalierung der Gebäude zur Kamera kann bei der Annäherung von allen Richtungen (wenn die Kamera von oben oder von der Seite, wie auch von vorn und hinten) funktionieren.

Beispielsweise können als Parameter ein minimaler Radius (min. Radius) und maximaler Radius (max. Radius) definiert werden. Der min. Radius kann angeben, ab welcher eingestellten Distanz ein Gebäude zur Kamera klein skaliert werden soll und mit welchem Wert die Höhe des Gebäudes gesetzt (skaliert) werden soll. Der max. Radius kann beispielsweise die Höhenskalierung der Gebäude außerhalb des gesetzten min. Radius einsetzen.

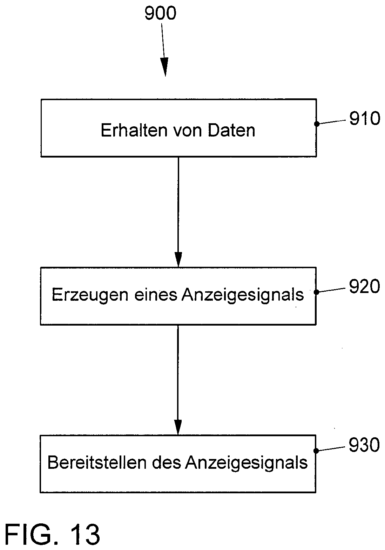

Fig. 13 zeigt ein Flussdiagramm eines Verfahrens 900 zur Erzeugung eines Anzeigesignals für eine Navigationsvorrichtung für ein Fahrzeug entsprechend einem Ausführungsbeispiel. Das Verfahren 900 umfasst ein Erhalten 910 von Daten einer dreidimensionalen Navigationskarte mit hochragenden Kartenobjekten einer Umgebung eines Fahrzeugs basierend auf einer ermittelten Position des Fahrzeugs. Ferner umfasst das Verfahren 900 ein Erzeugen 920 eines die Navigationskarte repräsentierenden Anzeigesignals, sodass die Navigationskarte aus einer von der ermittelten Position des Fahrzeugs abhängigen, über der Navigationskarte angeordneten Ansichtsposition betrachtet wird. Dabei wird eine Höhe eines hochragenden Objekts in der Navigationskarte in Abhängigkeit von einem Abstand des hochragenden Objekts zu der Ansichtsposition dynamisch verändert. Das Anzeigesignal wird erzeugt 920, sodass ein Objekt von Interesse hervorgehoben dargestellt wird, wobei sich das Objekt von Interesse in einem Bereich der Navigationskarte mit Kartenobjekten mit veränderten Höhen befindet. Zusätzlich umfasst das Verfahren 900 ein Bereitstellen 930 des die Navigationskarte repräsentierenden Anzeigesignals für eine Anzeigeeinrichtung zur Wiedergabe der Navigationskarte.

Das Verfahren 900 kann weitere optionale, zusätzliche oder alternative Verfahrensschritte umfassen, die optionalen, zusätzlichen oder alternativen Ausgestaltungen entsprechen, die in Zusammenhang mit dem zuvor beschriebenen Konzept oder zuvor beschriebenen Ausführungsbeispielen erläutert wurden.

Die in der vorstehenden Beschreibung, den nachfolgenden Ansprüchen und den beigefügten Figuren offenbarten Merkmalen können im Rahmen der nachfolgenden Ansprüche einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen ComputerProzessor (CPU = Central Processing Unit), einen GrafikProzessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem MikroProzessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Navigationsvorrichtung
- 110: Datenbereitsteller
- 112: Daten einer dreidimensionalen Navigationskarte
- 120: Prozessor
- 122: Anzeigesignal
- 210: erster Abstand
- 220: zweiter Abstand
- 410: Ansichtsposition
- 610: Ansichtsposition
- 800: Navigationsvorrichtung
- 830: Anzeigeeinrichtung
- 840: Positionsbestimmer
- 842: Position
- 780: alternative Fahrtroute
- 790: bevorzugte Fahrtroute
- 900: Verfahrens zur Erzeugung eines Anzeigesignals
- 910: Erhalten von Daten einer dreidimensionalen Navigationskarte
- 920: Erzeugen eines die Navigationskarte repräsentierenden Anzeigesignals
- 930: Bereitstellen des die Navigationskarte repräsentierenden Anzeigesignals
- 890: Objekt von Interesse
- 895: Objektmarkierung
- 980: Zieladresse 990 Tiefgarage
- 1010: Etage einer Tiefgarage
- 1020: freier Parkplatz
- 1030: Fahrtroute
- 1040: Tiefgaragenebene
- 1050: Weg zu alternativem Parkplatz
- 1110: Fahrtroutenstörungsmarkierung

## Patentansprüche

1. Eine Navigationsvorrichtung (100) für ein Fahrzeug, mit folgenden Merkmalen:
einem Datenbereitsteller (110), der ausgelegt ist, um Daten (112) einer dreidimensionalen Navigationskarte mit hochragenden Kartenobjekten bereitzustellen; und
einem Prozessor (120), der ausgelegt ist, um basierend auf einer ermittelten Position (842) eines Fahrzeugs Daten (112) einer dreidimensionalen Navigationskarte mit hochragenden Kartenobjekten einer Umgebung des Fahrzeugs von dem Datenbereitsteller (110) zu erhalten und ein die Navigationskarte repräsentierendes Anzeigesignal (122) für eine Anzeigeeinrichtung (830) zur Wiedergabe der Navigationskarte bereitzustellen,
wobei der Prozessor (120) ausgelegt ist, um das Anzeigesignal (122) zu erzeugen, sodass die Navigationskarte aus einer von der ermittelten Position (842) des Fahrzeugs abhängigen, über der Navigationskarte angeordneten Ansichtsposition (610) betrachtet durch die Anzeigeeinrichtung (830) wiedergebbar ist,
wobei der Prozessor (120) ausgelegt ist, um eine Höhe eines hochragenden Kartenobjekts in der Navigationskarte in Abhängigkeit von einem Abstand des hochragenden Kartenobjekts zu der Ansichtsposition (610) dynamisch zu verändern,
wobei der Prozessor (120) ausgelegt ist, um das Anzeigesignal (122) zu erzeugen, sodass ein Objekt von Interesse hervorgehoben dargestellt wird, wobei sich das Objekt von Interesse in einem Bereich der Navigationskarte mit Kartenobjekten mit veränderten Höhen befindet,
wobei das Objekt von Interesse ein Objekt einer Objektkategorie von Interesse ist, wobei das Objekt von Interesse ein Gebäude von Interesse ist, **dadurch gekennzeichnet, dass**
das Objekt von Interesse das am schnellsten von einer bevorzugten Fahrtroute erreichbare Objekt von Interesse der Objekte der Objektkategorie von Interesse ist, wobei das Gebäude ein Parkgebäude für Fahrzeuge ist, und wobei der Prozessor (120) ausgelegt ist, um das Anzeigesignal (122) zu erzeugen, sodass eine Etage des Parkgebäudes mit freien Parkplätzen eingeblendet wird.

2. Navigationsvorrichtung nach Anspruch 1, wobei der Prozessor (120) ausgelegt ist, um hochragende Kartenobjekte mit einem Abstand von der Ansichtsposition (610) von weniger als einem vordefinierten maximalen Abstand in ihrer Höhe zu reduzieren, wobei das hervorgehobene Objekt von Interesse einen Abstand von der Ansichtsposition (610) von weniger als dem vordefinierten maximalen Abstand aufweist.

3. Navigationsvorrichtung nach Anspruch 2, wobei der Prozessor (120) ausgelegt ist, um alle hochragenden Kartenobjekte mit einem Abstand von der Ansichtsposition (610) von weniger als einem vordefinierten maximalen Abstand mit Ausnahme von Objekten von Interesse in ihrer Höhe zu reduzieren.

4. Navigationsvorrichtung nach Anspruch 1, wobei der Prozessor (120) ausgelegt ist, um das Gebäude von Interesse durch schematische Darstellung seiner Etagen hervorgehoben darzustellen.

5. Navigationsvorrichtung nach Anspruch 1, wobei der Prozessor (120) ausgelegt ist, um das Anzeigesignal (122) zu erzeugen, sodass eine Fahrtroute zu einem freien Parkplatz mit kürzestem Fußweg zu einem Ausgang des Parkgebäudes aller freien Parkplätze zumindest einer Etage des Parkgebäudes eingeblendet wird.

6. Navigationsvorrichtung nach Anspruch 1 oder 5, wobei das Parkgebäude eine Tiefgarage ist, wobei der Prozessor (120) ausgelegt ist, um das Anzeigesignal (122) zu erzeugen, sodass die unterirdischen Etagen der Tiefgarage überirdisch angezeigt werden.

7. Fahrzeug mit einer festinstallierten Navigationsvorrichtung nach einem der vorhergehenden Ansprüche.

8. Verfahren (900) zur Erzeugung eines Anzeigesignals für eine Navigationsvorrichtung für ein Fahrzeug, mit folgenden Schritten:
Erhalten (910) von Daten (112) einer dreidimensionalen Navigationskarte mit hochragenden Kartenobjekten einer Umgebung eines Fahrzeugs basierend auf einer ermittelten Position des Fahrzeugs; und
Erzeugen (920) eines die Navigationskarte repräsentierenden Anzeigesignals (122), sodass die Navigationskarte aus einer von der ermittelten Position des Fahrzeugs abhängigen, über der Navigationskarte angeordneten Ansichtsposition (610) betrachtet wird, wobei eine Höhe eines hochragenden Objekts in der Navigationskarte in Abhängigkeit von einem Abstand des hochragenden Objekts zu der Ansichtsposition (610) dynamisch verändert wird,
wobei das Anzeigesignal erzeugt wird, sodass ein Objekt von Interesse hervorgehoben dargestellt wird, wobei sich das Objekt von Interesse in einem Bereich der Navigationskarte mit Kartenobjekten mit veränderten Höhen befindet;
wobei das Objekt von Interesse ein Objekt einer Objektkategorie von Interesse ist, wobei das Objekt von Interesse ein Gebäude von Interesse ist,
Bereitstellen (930) des die Navigationskarte repräsentierenden Anzeigesignals (122) für eine Anzeigeeinrichtung (830) zur Wiedergabe der Navigationskarte, **dadurch gekennzeichnet, dass**
das Objekt von Interesse das am schnellsten von einer bevorzugten Fahrtroute erreichbare Objekt von Interesse der Objekte der Objektkategorie von Interesse ist, wobei das Gebäude ein Parkgebäude für Fahrzeuge ist, und wobei das Anzeigesignal (122) erzeugt wird, sodass eine Etage des Parkgebäudes mit freien Parkplätzen eingeblendet wird.

9. Programm mit einem Programmcode zum Durchführen eines Verfahrens gemäß Anspruch 8, wenn der Programmcode auf einem Computer, einem Prozessor oder einer programmierbaren Hardwarekomponente ausgeführt wird.

## Claims

1. Navigation apparatus (100) for a vehicle, having the following features:
a data provider (110) designed to provide data (112) of a three-dimensional navigation map having elevated map objects; and
a processor (120) designed to take an ascertained position (842) of a vehicle as a basis for obtaining data (112) of a three-dimensional navigation map having elevated map objects for surroundings of the vehicle from the data provider (110) and to provide a display signal (122) representing the navigation map for a display device (830) for reproducing the navigation map,
wherein the processor (120) is designed to generate the display signal (122), so that the navigation map is reproducible by the display device (830) as seen from a viewing position (610) that is dependent on the ascertained position (842) of the vehicle and arranged above the navigation map,
wherein the processor (120) is designed to dynamically alter a height of an elevated map object in the navigation map on the basis of a distance of the elevated map object from the viewing position (610),
wherein the processor (120) is designed to generate the display signal (122), so that an object of interest is depicted in highlight, the object of interest being in an area of the navigation map having map objects having altered heights,
wherein the object of interest is an object in an object category of interest, the object of interest being a building of interest, **characterized in that**
the object of interest is the object of interest that can be reached most quickly from a preferred route of travel among the objects in the object category of interest,
wherein the building is a multistorey carpark for vehicles, and wherein the processor (120) is designed to generate the display signal (122), so that a level of the multistorey carpark having free parking spaces is shown.

2. Navigation apparatus according to Claim 1, wherein the processor (120) is designed to reduce the height of elevated map objects at a distance of less than a predefined maximum distance from the viewing position (610), the elevated object of interest being at a distance of less than the predefined maximum distance from the viewing position (610).

3. Navigation apparatus according to Claim 2, wherein the processor (120) is designed to reduce the height of all elevated map objects at a distance of less than a predefined maximum distance from the viewing position (610) with the exception of objects of interest.

4. Navigation apparatus according to Claim 1, wherein the processor (120) is designed to depict the building of interest in highlight by means of schematic depiction of its levels.

5. Navigation apparatus according to Claim 1, wherein the processor (120) is designed to generate the display signal (122), so that a route of travel to a free parking space with the shortest walking distance to an exit of the multistorey carpark among all free parking spaces on at least one level of the multistorey carpark is shown.

6. Navigation apparatus according to Claim 1 or 5, wherein the multistorey carpark is an underground carpark, the processor (120) being designed to generate the display signal (122), so that the underground levels of the underground carpark are displayed above ground.

7. Vehicle having a permanently installed navigation apparatus according to one of the preceding claims.

8. Method (900) for generating a display signal for a navigation apparatus for a vehicle, having the following steps:
obtaining (910) data (112) of a three-dimensional navigation map having elevated map objects for surroundings of a vehicle based on an ascertained position of the vehicle; and
generating (920) a display signal (122) representing the navigation map, so that the navigation map is seen from a viewing position (610) that is dependent on the ascertained position of the vehicle and arranged above the navigation map, a height of an elevated object in the navigation map being dynamically altered on the basis of a distance of the elevated object from the viewing position (610),
wherein the display signal is generated, so that an object of interest is depicted in highlight, the object of interest being in an area of the navigation map having map objects having altered heights;
wherein the object of interest is an object in an object category of interest, the object of interest being a building of interest,
providing (930) the display signal (122) representing the navigation map for a display device (830) for reproducing the navigation map, **characterized in that**
the object of interest is the object of interest that can be reached most quickly from a preferred route of travel among the objects in the object category of interest,
wherein the building is a multistorey carpark for vehicles, and wherein the display signal (122) is generated, so that a level of the multistorey carpark having free parking spaces is shown.

9. Program having a program code for performing a method according to Claim 8 when the program code is executed on a computer, a processor or a programmable hardware component.

## Revendications

1. Arrangement de navigation (100) pour un véhicule, ayant les caractéristiques suivantes :
un fournisseur de données (110) qui est conçu pour fournir des données (112) d'une carte de navigation tridimensionnelle avec des objets cartographiques saillant en hauteur ; et
un processeur (120) qui est conçu pour, en se basant sur une position déterminée (842) d'un véhicule, obtenir de la part du fournisseur de données (110) des données (112) d'une carte de navigation tridimensionnelle avec des objets cartographiques saillant en hauteur d'un environnement du véhicule et fournir un signal d'affichage (122) représentant la carte de navigation pour un dispositif d'affichage (830) en vue de la reproduction de la carte de navigation,
le processeur (120) étant conçu pour générer le signal d'affichage (122), de sorte que la carte de navigation puisse être reproduite par le dispositif d'affichage (830) vue depuis une position d'observation (610) dépendante de la position déterminée (842) du véhicule et disposée au-dessus de la carte de navigation,
le processeur (120) étant conçu pour modifier dynamiquement une hauteur d'un objet cartographique saillant en hauteur dans la carte de navigation en fonction d'une distance entre l'objet cartographique saillant en hauteur et la position d'observation (610),
le processeur (120) étant conçu pour générer le signal d'affichage (122) de telle sorte qu'un objet d'intérêt soit représenté mis en valeur, l'objet d'intérêt se trouvant dans une zone de la carte de navigation comportant des objets cartographiques aux hauteurs modifiées,
l'objet d'intérêt étant un objet d'une catégorie d'objets d'intérêt, l'objet d'intérêt étant un bâtiment d'intérêt, **caractérisé en ce que**
l'objet d'intérêt étant l'objet d'intérêt parmi les objets de la catégorie d'objets d'intérêt qui peut être atteint le plus rapidement par un itinéraire de conduite préféré, le bâtiment étant un immeuble de parking pour des véhicules et le processeur (120) étant conçu pour générer le signal d'affichage (122) de telle sorte qu'un étage de l'immeuble de parking ayant des emplacements de stationnement libres apparaissent en incrustation.

2. Arrangement de navigation selon la revendication 1, le processeur (120) étant conçu pour réduire la hauteur des objets cartographiques saillant en hauteur dont la distance par rapport à la position d'observation (610) est inférieure à une distance maximale prédéfinie, l'objet d'intérêt mis en valeur présentant une distance par rapport à la position d'observation (610) qui est inférieure à la distance maximale prédéfinie.

3. Arrangement de navigation selon la revendication 2, le processeur (120) étant conçu pour réduire la hauteur de tous les objets cartographiques saillant en hauteur dont la distance par rapport à la position d'observation (610) est inférieure à une distance maximale prédéfinie, à l'exception des objets d'intérêt.

4. Arrangement de navigation selon la revendication 1, le processeur (120) étant conçu pour représenter le bâtiment d'intérêt par une représentation schématique de ses étages.

5. Arrangement de navigation selon la revendication 1, le processeur (120) étant conçu pour générer le signal d'affichage (122) de telle sorte qu'un itinéraire de conduite jusqu'à un emplacement de stationnement libre qui présente le trajet à pied le plus court jusqu'à une sortie de l'immeuble de parking parmi tous les emplacements de stationnement libres d'au moins un étage de l'immeuble de parking apparaisse en incrustation.

6. Arrangement de navigation selon la revendication 1 ou 5, l'immeuble de parking étant un parking souterrain, le processeur (120) étant conçu pour générer le signal d'affichage (122) de telle sorte que les étages en sous-sol du parking souterrain soient affichés en surface.

7. Véhicule comprenant un arrangement de navigation installé à demeure selon l'une des revendications précédentes.

8. Procédé (900) pour générer un signal d'affichage pour un arrangement de navigation (100) pour un véhicule, comprenant les étapes suivantes :
obtention (910) de données (112) d'une carte de navigation tridimensionnelle avec des objets cartographiques saillant en hauteur d'un environnement d'un véhicule en se basant sur une position déterminée du véhicule ; et
génération (920) d'un signal d'affichage (122) représentant la carte de navigation, de sorte que la carte de navigation soit observée depuis une position d'observation (610) dépendante de la position déterminée (842) du véhicule et disposée au-dessus de la carte de navigation, la hauteur d'un objet cartographique saillant en hauteur dans la carte de navigation étant modifiée dynamiquement en fonction d'une distance entre l'objet cartographique saillant en hauteur et la position d'observation (610),
le signal d'affichage étant généré de telle sorte qu'un objet d'intérêt soit représenté mis en valeur, l'objet d'intérêt se trouvant dans une zone de la carte de navigation comportant des objets cartographiques aux hauteurs modifiées,
l'objet d'intérêt étant un objet d'une catégorie d'objets d'intérêt, l'objet d'intérêt étant un bâtiment d'intérêt, fourniture (930) du signal d'affichage (122) représentant la carte de navigation pour un dispositif d'affichage (830) en vue de reproduire la carte de navigation, **caractérisé en ce que**
l'objet d'intérêt est l'objet d'intérêt parmi les objets de la catégorie d'objets d'intérêt qui peut être atteint le plus rapidement par un itinéraire de conduite préféré, le bâtiment étant un immeuble de parking pour des véhicules et le signal d'affichage (122) étant généré de telle sorte qu'un étage de l'immeuble de parking ayant des emplacements de stationnement libres apparaissent en incrustation.

9. Programme comprenant un code de programme pour mettre en oeuvre un procédé selon la revendication 8 lorsque le code de programme est exécuté sur un ordinateur, un processeur ou un composant matériel programmable.
